# EUROPÄISCHE PATENTSCHRIFT

(11) **EP 1 469 627 B1**
(45) Veröffentlichungstag und Bekanntmachung des Hinweises auf die Patenterteilung: **03.01.2007**
(21) Anmeldenummer: 03360047.9
(22) Anmeldetag: 14.04.2003
(51) Int. Cl.: H04L 1/22, B61L 1/20

(54) **Verfahren zur signaltechnisch sicheren Datenübertragung**
Method for secure data transfer
Procédé de transfert sécurisé de données

(43) Veröffentlichungstag der Anmeldung: 20.10.2004
(73) Patentinhaber: ALCATEL Transport Solution Deutschland GmbH, 70430 Stuttgart (DE)
(72) Erfinder: Klemm, Rainer, 71711 Steinheim (DE); Schüle, Rainer, 71287 Weissach (DE)
(74) Vertreter: Rausch, Gabriele

(56) Entgegenhaltungen:
- EP-A- 0 410 270
- EP-A- 0 738 973
- DD-B- 278 435

## Beschreibung

### Stand der Technik

Die Erfindung betrifft ein Verfahren zur signaltechnisch sicheren Datenübertragung und Datenrückgewinnung und eine Sende-/Empfangseinheit zur Durchführung des Verfahrens.

Bei der Steuerung und Überwachung sicherheitskritischer Vorgänge, etwa im Bereich der Luft- und Raumfahrt oder der Eisenbahnsignaltechnik werden sicherheitsrelevante Daten häufig mehrfach parallel übermittelt, um Fehler in der Datenübertragung zu erkennen. Das System muss signaltechnisch sicher sein, so dass sich ein technischer Defekt höchstens auf die sichere Seite hin auswirken kann.

Ein sicherheitskritischer Vorgang ist beispielsweise die Abstandssicherung bei Zügen. Es wird das Prinzip des Fahrens im festen Raumabstand angewendet. Dabei wird die Strecke durch Hauptsignale in Blockabschnitte unterteilt. Damit ein Zug durch ein fahrtzeigendes Signal die Einfahrt in einen Blockabschnitt gestattet werden kann, muss der Blockabschnitt frei sein und ein vorausfahrender Zug muss durch ein haltzeigendes Signal gedeckt sein. Beim Zweirichtungsbetrieb darf außerdem keine Gegenfahrt zugelassen werden.

Zur technischen Sicherung des Fahrens im festen Raumabstand wird beispielsweise ein Streckenblocksystem verwendet. Nach Einfahrt eines Zuges in eine Blockstrecke wird das Signal am Anfang des Blockabschnitts auf Halt gestellt und verschlossen. Gleichzeitig wird eine Belegungsinformation an das Signal am Ende des Blockabschnitts gesandt. Nach Prüfung, dass der Zug den Blockabschnitt vollständig verlassen hat und durch ein haltzeigendes Signal gedeckt wird, wird eine Freigabeinformation zum Aufheben des Signalverschlusses zum Signal an den Anfang des Blockabschnitts übermittelt.

Zwischen den Signalen bzw. Stellwerken müssen also mehrere Daten, insbesondere parallele Daten, übertragen werden. Dies geschieht in sogenannten Telegrammen. Die Daten zwischen den Signalen bzw. Stellwerken müssen also zuverlässig und signaltechnisch sicher übertragen werden und aus den Telegrammen rekonstruiert werden. Treten Fehler in der Übertragung auf, muss ein sicherer Zustand herbeigeführt werden, so dass Unfälle vermieden werden.

In der DD 278 435 A ist eine Schaltung zur signaltechnisch sicheren Ausgabe von Prozessdaten beschrieben, deren Eingangsdaten auf gleich aufgebaute, nach gleichen Programmen arbeitende Verarbeitungseinheiten geschaltet sind, deren auf ihren internen Datenbussen liegende Daten mittels verdoppelter erster Vergleicher laufend auf Übereinstimmung geprüft werden. In deren Ausgaberegistern anstehende Ausgangsdaten werden mittels zweiter, ebenfalls verdoppelter Vergleicher auf Überstimmung geprüft und bei Übereinstimmung an die Prozesselemente ausgegeben. Die Ausgangssignale der beiden ersten Vergleicher werden mit einem Eingangstakt in einer Statuseinheit zu einem sicheren Takt verknüpft, der den Takteingängen fehlersicherer Verknüpfungsschaltungen zugeführt wird, welche die an einander entsprechenden Ausgängen der Ausgaberegister der beiden Verarbeitungseinheiten anstehenden Ausgangsdaten bitparallel konjunktiv verknüpfen. Die fehlersicheren Verknüpfungsschaltungen steuern mit ihrem jeweiligen Taktausgangssignal exklusiv zugeordnete Prozesselemente.

Aus der EP 0 738 973 A1 ist ein Verfahren für eine fehleroffenbarende Übertragung von Nutzdaten parallel über wenigstens zwei Sender, zwei Kanäle und zwei Empfänger von einer Nachrichtenquelle zu einer Nachrichtensenke bekannt geworden. Diese Druckschrift beschäftigt sich im Wesentlichen mit dem Erzeugen und der Auswertung von Referenzdaten, um eine Fehlererkennung durch den Vergleich von Daten unterschiedlicher Datenkanäle sicherzustellen.

Aus der EP 0 410 270 A2 ist ein Verfahren zum Betrieb einer signaltechnisch sicheren Schnittstelle bekannt geworden.

### Aufgabe der Erfindung

Aufgabe der Erfindung ist es deshalb, ein Verfahren und eine Einrichtung bereit zu stellen, das bzw. die die Ausgabe signaltechnisch sicherer paralleler Daten ermöglichen.

### Gegenstand der Erfindung

Gelöst wird diese Aufgabe erfindungsgemäß durch ein Verfahren zur sicheren Rückgewinnung von parallelen Daten aus einem Telegramm für die Eisenbahntechnik, bei dem die parallelen Daten enthaltende ersten Telegramme eines ersten Datenkanals auf Fehlerfreiheit überprüft werden, ein erstes dynamisches Taktsignal generiert wird, wobei der Signalpegel des ersten dynamischen Taktsignals geändert wird, wenn ein fehlerfreies erstes Telegramm erkannt wird.

Die Überprüfung auf Fehlerfreiheit erfolgt, indem der Prüfcode des Telegramms nachgerechnet wird. Ist der Prüfcode in Ordnung, könnten die parallelen Daten des Telegramms verwendet und ausgegeben werden. Mit jedem als fehlerfrei erkannten Telegramm wird der Signalpegel des dynamischen Taktsignals geändert (Toggle). Werden nacheinander mehrere fehlerhafte Telegramme empfangen, so wird der Signalpegel des dynamischen Taktsignals nicht verändert. Dies deutet darauf hin, dass in der Datenübertragung ein Fehler aufgetreten ist. Die Anzahl der fehlerhaften Telegramme oder eine maximale Zeit, während der fehlerhafte Telegramme toleriert werden, kann vorgegeben werden. Wird die Anzahl oder die Zeit überschritten, dürfen nur solche parallele Daten ausgegeben werden, dass ein sicherer Zustand des Systems eingenommen wird. Dieser Zustand ist vorzugsweise irreversibel, d.h. nur durch menschliche Interaktion wieder änderbar. Im Falle der Eisenbahnsignaltechnik bewirkt der sichere Zustand, dass keine Unfälle passieren, insbesondere zwei Züge gleichzeitig einen Blockabschnitt befahren.

Die Sicherheit wird noch erhöht, wenn in mindestens einem zweiten Datenkanal parallele Daten enthaltende zweite Telegramme des zweiten Datenkanals auf Fehlerfreiheit überprüft werden, ein zweites dynamisches Taktsignal generiert wird, wobei der Signalpegel des zweiten dynamischen Taktsignals geändert wird, wenn ein fehlerfreies zweites Telegramm erkannt wird, die parallelen Daten der ersten und zweiten Telegramme ausgegeben werden, solange sich der Signalpegel des ersten und zweiten dynamischen Taktsignals ändert, und signaltechnisch sichere Daten anstatt der parallelen Daten ausgegeben werden, wenn sich der Signalpegel des ersten oder zweiten dynamischen Taktsignals nicht ändert oder wenn das erste dynamische Taktsignal über einen vorgebbaren ersten Zeitraum oder für eine vorgebbare erste Anzahl erster Telegramme seinen Signalpegel nicht ändert oder wenn das zweite dynamische Taktsignal über einen vorgebbaren zweiten Zeitraum oder für eine vorgebbare zweite Anzahl zweiter Telegramme seinen Signalpegel nicht ändert.

Identische parallele Daten werden in mindestens zwei Kanälen in Telegrammen übertragen und aus den Telegrammen rückgewonnen. Die Telegramme aller Kanäle werden auf Fehlerfreiheit überprüft. Durch die mehrfache Übertragung und Rückgewinnung derselben Daten wird die Sicherheit und Zuverlässigkeit der Daten weiter erhöht. Werden nur in einem Kanal fehlerhafte Telegramme detektiert, werden in allen Kanälen nur signaltechnisch sichere Daten ausgegeben. Die Zeitdauer, während der fehlerhafte Telegramme akzeptiert werden, bzw. die Anzahl tolerierter fehlerhafter Telegramme kann für alle Kanäle unterschiedlich oder gleich vorgegeben werden.

Bei einer bevorzugten Verfahrensvariante wird die Datenausgabe der parallelen Daten durch einen Überwachungsschaltkreis überwacht. Insbesondere bei mehreren Kanälen bewirkt der Überwachungsschaltkreis, dass parallele Daten nur ausgegeben werden, wenn in den Kanälen dieselben Daten anliegen. Mit dem Überwachungsschaltkreis kann außerdem überwacht werden, dass der Übergang in den sicheren Zustand zuverlässig durchgeführt wird.

Wenn die Telegramme mindestens zweier Kanäle zwischen zwei Sende-/Empfangseinheiten zeitgleich übertragen werden, können auch die Daten aus den Telegrammen zeitgleich rückgewonnen werden und ausgegeben werden. Vorzugsweise werden die parallelen Daten vor der Übertragung in mindestens zwei Kanälen eingelesen. Beim Einlesen werden sich entsprechende Daten der mindestens zwei Kanäle miteinander verglichen. Sind die Daten nicht identisch, wird der signaltechnisch sichere Zustand eingenommen. Dies bedeutet, dass ein Telegramm erzeugt wird, das Daten enthält, die zu einem signaltechnisch sicheren Zustand führen.

Die Aufgabe wird außerdem gelöst durch eine Sende- /Empfangseinheit mit den Merkmalen des Anspruchs 5. Durch die Überwachungsvorrichtung wird die zusätzliche Sicherheitsstufe eingebaut, dass nur Daten ausgegeben werden, wenn erkannt wurde, dass die Datenübertragung einwandfrei funktioniert. Die Daten an den Datenausgängen des Rechners können an Ausgaberelais gegeben werden, die mit der Überwachungsschaltung in Verbindung stehen und Daten aus der Sende/Empfangseinheit ausgeben können. Mehrere Rechner, insbesondere jeweils ein Rechner für jeden Kanal, können in einer Recheneinheit zusammengefasst sein.

Bei einer besonders bevorzugten Ausführungsform weist die Überwachungsvorrichtung eine Dynamikschaltung und ein Überwachungsrelais auf. Die Dynamikschaltung ist vorzugsweise eine Kaskadenschaltung, die mehrere Kondensatoren aufweist. Wenn am Eingang der Dynamikschaltung das sich ständig ändernde dynamische Taktsignal anliegt, wird der Ausgang der Dynamikschaltung auf einer negativen Spannung gehalten. Dies bewirkt, dass das Überwachungsrelais angezogen bleibt und die Datenausgabe der parallelen Daten erlaubt. Insbesondere können im Normalbetrieb durch die Ausgaberelais nur parallele Daten aus der Sende-/Empfangseinheit ausgegeben werden, wenn das Überwachungsrelais angezogen ist. Aufgrund der Kaskadenschaltung von Kondensatoren bleibt die negative Spannung am Ausgang der Dynamikschaltung eine gewisse Zeit aufrecht erhalten, wenn sich der Signalpegel des dynamischen Taktsignals nicht ändert. Über geeignete Wahl von Kondensatoren oder das Setzen von Jumpern, so dass unterschiedlich große Kondensatoren angeschlossen werden, kann die maximal zulässige Zeit zwischen zwei fehlerfreien Telegrammen eingestellt werden. Der oder die Kondensatoren stellen ein Zeitglied dar. Somit kann die akzeptierte Übertragungsqualität bzw. Fehlertoleranz bei Übertragungsstörungen der Telegramme über die Überwachungsvorrichtung eingestellt werden. Wird die maximal zulässige Zeit überschritten, wird die Spannung am Ausgang der Kaskadenschaltung null und das Überwachungsrelais fällt ab. Dies bewirkt, dass die Ausgaberelais nur noch signaltechnisch sichere Daten ausgeben. Im Testbetrieb kann das Überwachungsrelais überbrückt werden, so dass ein Abfallen des Überwachungsrelais nicht dazu führt, dass der irreversible sichere Zustand eingenommen wird.

Wenn die Datenausgänge der Rechner für die parallelen Daten jeweils mit einem Ausgaberelais verbunden sind, an die die parallelen Daten übergeben werden, kann die parallele Ausgabe der Daten sicher gestellt werden.

Die Sicherheit wird weiter verbessert, wenn ein Überwachungsschaltkreis zur Überwachung der Überwachungsvorrichtung, insbesondere des Überwachungsrelais, vorgesehen ist.

Das zeitgleiche Übertragen von Telegrammen mehrerer Kanäle zwischen mindestens zwei Sende-/Empfangseinheiten wird dadurch ermöglicht, dass die Sende-/Empfangseinheiten jeweils mindestens eine ISDN-Schnittstelle aufweisen und über einen Kommunikationskanal verbunden sind. Über den Kommunikationskanal können die Telegramme vorteilhafterweise bidirektional übertragen werden. Die zeitgleich übertragenen Telegramme können dann auch zeitgleich in der Sende-/Empfangseinheit ausgewertet werden, d.h. den Rechnern jedes Kanals zugeleitet werden, wo dann für jeden Kanal ein dynamisches Taktsignal generiert wird.

In besonders einfacher Ausgestaltung ist der Kommunikationskanal als zweidrahtige Leitung ausgebildet.

Weitere Merkmale und Vorteile der Erfindung ergeben sich aus der nachfolgenden Beschreibung eines Ausführungsbeispiels der Erfindung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

### Zeichnung

Ein Ausführungsbeispiel des erfindungsgemäßen Systems zur signaltechnisch sicheren Datenübertragung ist in der schematischen Zeichnung dargestellt und wird in der nachfolgenden Beschreibung erläutert. Es zeigt:
- **Fig. 1**: eine erste Sende-/Empfangseinheit des Systems zur signaltechnisch sicheren Datenübertragung; und
- **Fig. 2**: eine zweite Sende-/Empfangseinheit des Systems zur signaltechnisch sicheren Datenübertragung.

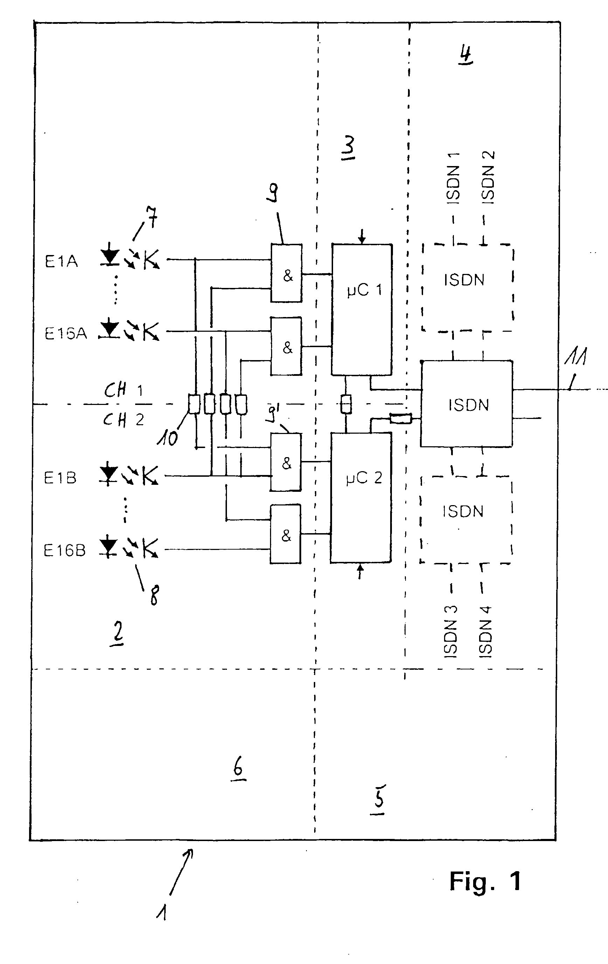

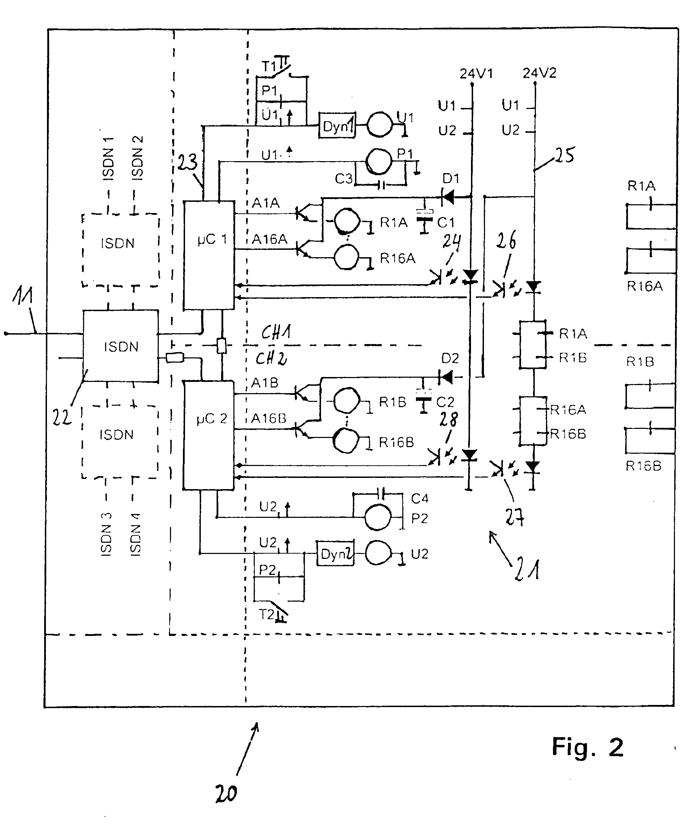

In der **Fig. 1** ist eine erste Sende-/Empfangseinheit 1 dargestellt, in der eine Dateneingangsschaltung 2 im Detail dargestellt ist. Die Sende/Empfangseinheit 1 umfasst weiterhin eine Recheneinheit 3, eine Datenübertragungseinheit 4, eine Stromversorgung 5 und eine Datenausgangsschaltung 6. Die Dateneingangsschaltung 1 ist in einen ersten Kanal CH1 und in einen zweiten Kanal CH2 unterteilt. Im ersten Kanal CH1 werden parallele Daten E1A - E16A, beispielsweise von einem Stellwerk, über Optokoppler 7 eingelesen. Im Kanal CH2 werden parallele Daten E1B - E16B über Optokoppler 8 eingelesen. Im Komparator 9 werden die Daten E1A und E1B miteinander verglichen. Bei übereinstimmenden Daten, werden sie in einen als Mikrokontroller ausgebildeten Rechner µC1 der Recheneinheit 3 eingelesen. Die Daten E1A und E1B werden außerdem im Komparator 9' verglichen und bei übereinstimmenden Daten in den als Mikrokontroller ausgebildeten Rechner µC2 eingegeben. Sind die Daten nicht identisch, wird durch zumindest einen der Rechner µC1, µC2 der signaltechnisch sichere Zustand ausgelöst. Zwischen dem ersten und zweiten Kanal CH1, CH2 sind Entkopplungswiderstände 10 vorgesehen, so dass ein Fehler im ersten Kanal CH1 keine Auswirkung auf den zweiten Kanal CH2 und umgekehrt hat. Die übrigen parallelen Daten E2A - E16A, E2B - E16B werden ebenfalls in Komparatoren verglichen und in die Rechner µC1, µC2 eingelesen. In den Rechnern µC1, µC2 werden jeweils Telegramme erstellt, die an eine ISDN-Schnittstelle ISDN weitergeleitet werden. Ein Telegramm enthält alle parallele Daten, einen Prüfcode, die Telegrammnummer, einen Übertragungscode und die Senderadresse. Die Telegramme werden über die ISDN-Schnittstelle ISDN auf einen Kommunikationskanal 11 geleitet, der als zweiadrige Verbindungsleitung ausgebildet ist. Somit können die in den Rechnern µC1, µC2 generierten Telegramme parallel (zeitgleich) an eine in der Fig. 2 dargestellte zweite Sende-/Empfangseinheit übertragen werden. In der Datenübertragungseinheit 4 sind noch weitere optionale ISDN-Schnittstellen dargestellt, über die die Telegramme übertragen werden können.

In der **Fig. 2** ist eine zweite Sende-/ Empfangseinheit 20 dargestellt, die der Sende-/Empfangseinheit 1 der Fig. 1 entspricht. In der Sende-Empfangseinheit 20 der Fig. 2 ist die Datenausgangsschaltung 21 im Detail dargestellt. Über den Kommunikationskanal 11 zur bidirektionalen Datenübertragung werden durch die ISDN-Schnittstelle 22 Telegramme von der Sende-/Empfangseinheit 1 empfangen. Telegramme vom Rechner µC1 der Fig. 1 werden zum Rechner µC1 der Fig. 2 geleitet. Entsprechend werden im Rechner µC2 der Fig. 1 generierte Telegramme zum Rechner µC2 der Fig. 2 weitergeleitet. In den Rechnern µC1, µC2 der Fig. 2 werden die Prüfcodes der Telegramme überprüft, indem mit einem bekannten Polynom die Prüfcodes nachgerechnet werden. Wird im Rechner µC1 ein korrekt übermitteltes Telegramm festgestellt, so wird am Ausgang 23 des ersten Rechners µC1 die Signalschwelle eines dynamischen Taktsignals geändert (Toggle). Gleichzeitig werden die parallelen Daten auf die Datenausgänge A1A - A16A des Rechners µC1 gegeben und an Ausgaberelais R1A - R16A weitergegeben (es sind immer nur 2 von 16 Relais dargestellt). Die Ausgangskontakte der Ausgaberelais R1A - R16A bilden die Datenausgänge der Sende-/Empfangseinheit 20. Bei stetig ankommenden korrekten Telegrammen nimmt das dynamische Taktsignal am Ausgang 23 eine Rechteckform an. Das dynamische Taktsignal wird auf eine Dynamikschaltung Dyn1 gegeben. Die Dynamikschaltung Dyn1 ist eine Kaskadenschaltung, bei der eine dauerhaft negative Ausgangsspannung generiert wird, wenn am Eingang eine Rechteckspannung anliegt. Solange an der Dynamikschaltung Dyn1 eine negative Spannung am Ausgang anliegt, wird der Zustand des Überwachungsrelais U1 beibehalten. Werden im Rechner µC1 mehrere fehlerhafte Telegramme detektiert, wird das dynamische Taktsignal am Ausgang 23 nicht verändert. Dies bewirkt, dass die negative Spannung am Ausgang der Dynamikschaltung Dyn1 gegen null geht und das Überwachungsrelais U1 abfällt. Das Überwachungsrelais U1 ist auch an den Eingang der Dynamikschaltung Dyn1 geschaltet. Es kann nicht mehr anziehen, wenn es einmal abgefallen ist. Es erfolgt also eine sichere irreversible Abschaltung. Wenn das Überwachungsrelais U1 abfällt, wird auch die Versorgungsspannung 24V1 für die Ausgaberelais R1A - R16A unterbrochen. Wenn dies geschieht, fallen die Ausgaberelais R1A - R16A ab und wird ein signaltechnisch sicherer Zustand eingenommen. Es erfolgt also eine sichere irreversible Abschaltung der Ausgaberelais. Aus der sicheren irreversiblen Abschaltung kann nur durch manuelle Betätigung der Taste T1 gelangt werden. Durch Betätigen der Taste T1 wird die Dynamikschaltung Dyn1 aktiviert und das Überwachungsrelais U1 wird angezogen. Die Ausgaberelais R1A - R16A werden aktiv und geben wieder die parallelen Daten aus, daraufhin wird der Ausgang 23 und damit das dynamische Taktsignal wieder auf die Dynamikschaltung Dyn1 gelegt.

Zur Überwachung, ob die sichere irreversible Abschaltung funktioniert, ist parallel zum Überwachungsrelais U1 ein Prüfrelais P1 geschaltet. Durch das Prüfrelais P1 kann das Überwachungsrelais U1 überbrückt werden, wenn das Überwachungsrelais U1 angezogen ist. Aufgrund der Überbrückung kann das Überwachungsrelais U1 abfallen, aber der Zustand der Ausgaberelais R1A - R16A wird nicht verändert. Dies geschieht in einem definierten Zeitfenster und wird vom Rechner µC1 über den Optokoppler 24 überprüft. Wenn das Überwachungsrelais U1 korrekt funktioniert, muss bei dessen Abfallen die Spannung 24V1 abgetrennt werden. Diese Abtrennung und Zeitdauer der Abtrennung wird über den Optokoppler 24 an den Rechner µC1 gemeldet. Der Kondensator C3 hält das Prüfrelais P1 angezogen, so dass genügend Zeit besteht, um das Überwachungsrelais U1 wieder zu starten bzw. anzuziehen. Der Zustand der Ausgaberelais R1A - R16A wird aufgrund des Kondensators C1 und der Diode D1 während der Überwachung aufrechterhalten. Wenn das Überwachungsrelais U1 abgefallen ist, fällt das Signal des Überwachungsschaltkreises 25 ab. Dies bedeutet, dass die Spannung 24V2 abgetrennt wird. Das Abfallen des Signals wird über einen Optokoppler 26 an den Rechner µC1 gemeldet. Wird das Abfallen des Signals nicht detektiert, wird das Signal am Ausgang 23 nicht mehr generiert, da das Überwachungsrelais U1 nicht zuverlässig geschaltet hat. Ist der Test erfolgreich, wird das Signal 23 wieder auf die Dynamikschaltung Dyn1 geschaltet. Im Überwachungsschaltkreis 25 wird ferner geprüft, ob alle RelaisPaare R1A, R1 B - R16A, R16B paarweise den gleichen Zustand einnehmen, d.h. ob in ihnen dieselben Daten anliegen. Ist dies der Fall, fließt ein Strom durch den Überwachungsschaltkreis 25, was durch den Optokoppler 26 an den Rechner µC1 gemeldet wird. Für den zweiten Kanal CH2 wird dies durch den Optokoppler 27 an den zweiten Rechner µC2 gemeldet. Durch das Überwachungsrelais U1 wird auch der Überwachungsschaltkreis 25 unterbrochen. Wird im Überwachungsschaltkreis 25 das Signal "high" detektiert, ist in der Datenausgangsschaltung 21 der Sende-/Empfangseinheit alles in Ordnung. Wird durch einen der Optokoppler 26, 27 gemeldet, dass das Signal des Überwachungsschaltkreises 25 auf "low" geht (die Spannung 24V2 ist abgetrennt), ist entweder ein Fehler detektiert worden, oder mindestens eines der Relaispaare R1A, R1B - R16A, R16B hat noch nicht dieselben Daten, oder es wird ein Test des Überwachungsrelais U1 durchgeführt. Der Rechner µC1 toleriert kurzzeitig ein Signal "low" im Überwachungsschaltkreis 25, um ein Umschalten der Relais R1A, R1 B - R16A, R16B zu erlauben. Ist das Signal für eine längere Zeit "low", wird durch den Rechner µC1 die Dynamikschaltung Dyn1 abgeschaltet und es wird ein signaltechnisch sicherer Zustand eingenommen. Die Testzeit zum Testen des Überwachungsrelais U1 kann vorgegeben sein, und kann insbesondere zwei Sekunden betragen.

Die beschriebenen Vorgänge für den ersten Kanal CH1 gelten analog für den zweiten Kanal CH2. Insbesondere ist zu beachten, dass die Spannungen 24V1 und 24V2 sowohl durch das Überwachungsrelais U1 als auch durch das Überwachungsrelais U2 abgetrennt werden können. Die Abtrennung von 24V1 wird über den Optokoppler 24 an den ersten Rechner µC1 und über den Optokoppler 28 an den zweiten Rechner µC2 gemeldet. Analog wird ein Abtrennen der Spannung 24V2 über den Optokoppler 26 an den ersten Rechner µC1 und über den Optokoppler 27 an den zweiten Rechner µC2 gemeldet.

Die Ausgaberelais R1A - R16A und R1B - R16B haben also drei Kontakte, nämlich einen Kontakt für die Ausgabe der parallelen Daten und zwei Kontakte für den Überwachungsschaltkreis 25. Die Überwachungsrelais U1, U2 haben vier Kontakte, nämlich einen für die Dynamikschaltung Dyn1, Dyn2, zwei Kontakte für den Überwachungsschaltkreis 25 und einen Kontakt für das Prüfrelais P1, P2. Die Prüfrelais P1, P2 haben zwei Kontakte, einen zur sicheren irreversiblen Abschaltung und einen damit die Rechner µC1, µC2 nach dem Test der Überwachungsrelais U1, U2 prüfen können, ob die Prüfrelais P1, P2 wie erwartet wieder abgefallen sind. Ist dies nicht der Fall, wird durch die Rechner µC1, µC2 die sichere irreversible Abschaltung eingeleitet.

## Patentansprüche

1. Verfahren zur sicheren Rückgewinnung von parallelen Daten aus einem Telegramm für die Eisenbahnsignaltechnik, mit folgenden Verfahrensschritte:
a) Überprüfen der die parallelen Daten enthaltende ersten Telegramme eines ersten Datenkanals (CH1) auf Fehlerfreiheit;
b) Generieren eines ersten dynamischen Taktsignals, wobei der Signalpegel des ersten dynamischen Taktsignals geändert wird, wenn ein fehlerfreies erstes Telegramm erkannt wird;
c) Überprüfen der die parallelen Daten enthaltende zweiten Telegrammen einer zweiten Datenkanals (CH2) auf Fehlerfreiheit;
d) Generieren eines zweiten dynamischen Taktsignals, wobei der Signalpegel des zweiten dynamischen Taktsignals geändert wird, wenn ein fehlerfreies zweites Telegramm erkannt wird;
e) Ausgabe signaltechnisch sicherer Daten die einem sicheren Zustand aufweisen, wenn das erste dynamische Taktsignal über einen vorgebbaren ersten Zeitraum oder für eine vorgebbare erste Anzahl erster Telegramme seinen Signalpegel nicht ändert; oder wenn das zweite dynamische Taktsignal über einen vorgebbaren zweiten Zeitraum oder für eine vorgebbare zweite Anzahl zweiter Telegramme seinen Signalpegel nicht ändert
f) anderfalls, Ausgabe der parallelen Daten.

2. Verfahren nach Anspruch 1, **dadurch gekennzeichnet, dass** die Datenausgabe der parallelen Daten durch einen Überwachungsschaltkreis (25) überwacht wird.

3. Verfahren nach Anspruch 1, **dadurch gekennzeichnet, dass** die Telegramme mindestens zweier Kanäle (CH1, CH2) zwischen zwei Sende-/Empfangseinheiten (1, 20) zeitgleich übertragen werden.

4. Sende- /Empfangseinheit (1, 20) für ein sicherheitsrelevantes System der Eisenbahnsignaltechnik zur Durchführung des Verfahrens nach Anspruch 1, wobei die Sende-/Empfangseinheit (1, 20) einen ersten Rechner (µC1) aufweist der zur Prüfung der Fehlerfreiheit eines ersten Telegramms eines ersten Datenkanals (CH1) im ersten Telegramm enthaltene parallele Daten ausgibt, mit einer ersten Überwachungsvorrichtung ((Dyn 1, ); (U1)) in Verbindung steht und an die ersten Überwachungsvorrichtung ((Dyn 1); (U1)) ein erstes dynamisches Taktsignal liefert, wobei die erste Überwachungsvorrichtung ((Dyn 1,); (U1) aus dem ersten dynamischen Taktsignal ermittelt, ob die im Telegramm enthaltenen, an den Datenausgängen des Rechners (µC1) anliegenden, parallelen Daten aus der Sende-/Empfangseinheit (1, 20) ausgegeben werden dürfen weiterhin einen zweiten Rechner (µC2) aufweist zur Prüfung der Fehlerfreiheit eines zweites Telegramms eines zweiten Datenkanals (CH2) im zweiten Telegramm enthaltene parallele Daten ausgibt, mit einer zweiten Überwachungsvorrichtung ((Dyn2); (U2)) in Verbindung steht und an die zweite Überwachungsvorrichtung ((Dyn2); (U2)) ein zweiter dynamisches Taktsignal liefert wobei die zweite Überwachungsvorrichtung aus dem zweiten Taktsignal ermittelt, ob die in Telegramm enthaltenden parallelen Daten aus der Sende-/Empfangseinheit ausgegeben werden dürfen.

5. Sende-/Empfangseinheit nach Anspruch 4, **dadurch gekennzeichnet, dass** die Überwachungsvorrichtung eine Dynamikschaltung (Dyn 1, Dyn2) und ein Überwachungsrelais (U1, U2) aufweist.

6. Sende-/Empfangseinheit nach Anspruch 4, **dadurch gekennzeichnet, dass** die Datenausgänge des Rechners (µC1, µC2) für die parallelen Daten jeweils mit einem Ausgaberelais (R1A - R16A, R1 B - R16B) verbunden sind, an die die parallelen Daten übergeben werden.

7. Sende-/Empfangseinheit nach Anspruch 4, **dadurch gekennzeichnet, dass** ein Überwachungsschaltkreis (25) zur Überwachung der Überwachungsvorrichtung vorgesehen ist.

8. System zur signaltechnisch sicheren Übertragung von Telegrammen, **dadurch gekennzeichnet, dass** mindestens zwei Sende-/Empfangseinheiten (1, 20) nach Anspruch 4, jeweils mindestens eine ISDN-Schnittstelle (ISDN, 22) aufweisen und über einen Kommunikationskanal (11) verbunden sind.

9. System nach Anspruch 8, **dadurch gekennzeichnet, dass** der Kommunikationskanal (11) als zweidrahtige Leitung ausgebildet ist.

## Claims

1. Method of safe recovery of parallel data from a telegram for railway signalling, with the following method steps:
a) checking the first telegrams, containing parallel data, of a first data channel (CH1) to be error-free;
b) generating a first dynamic clock pulse signal, the signal level of the first dynamic clock pulse signal being changed if an error-free first telegram is detected;
c) checking the second telegrams, containing parallel data, of a second data channel (CH2) to be error-free;
d) generating a second dynamic clock pulse signal, the signal level of the second dynamic clock pulse signal being changed if an error-free second telegram is detected;
e) output of safe signalling data which indicates a safe state if the first dynamic clock pulse signal does not change its signal level over a specifiable first period or for a specifiable first number of first telegrams, or if the second dynamic clock pulse signal does not change its signal level over a specifiable second period or for a specifiable second number of second telegrams;
f) otherwise, output of the parallel data.

2. Method according to Claim 1, **characterized in that** the data output of the parallel data is monitored by a monitoring circuit (25).

3. Method according to Claim 1, **characterized in that** the telegrams of at least two channels (CH1, CH2) are transmitted between two transmission/reception units (1, 20) simultaneously.

4. Transmission/reception unit (1, 20) for a safety-relevant railway signalling system to carry out the method according to Claim 1, the transmission/reception unit (1, 20) having a first computer (µC1), which to test the freedom from errors of a first telegram of a first data channel (CH1) outputs parallel data which is contained in the first telegram, is connected to a first monitoring device (Dyn 1, U1), and supplies a first dynamic clock pulse signal to the first monitoring device (Dyn 1, U1), the first monitoring device (Dyn 1, U1) determining from the first dynamic clock pulse signal whether the parallel data which is contained in the telegram and is present at the data outputs of the computer (µC1) is allowed to be output from the transmission/reception unit (1, 20), and having a second computer (µC2), which to test the freedom from errors of a second telegram of a second data channel (CH2) outputs parallel data which is contained in the second telegram, is connected to a second monitoring device (Dyn2, U2), and supplies a second dynamic clock pulse signal to the second monitoring device (Dyn2, U2), the second monitoring device determining from the second dynamic clock pulse signal whether the parallel data which is contained in the telegram is allowed to be output from the transmission/reception unit.

5. Transmission/reception unit according to Claim 4, **characterized in that** the monitoring circuit has a dynamic circuit (Dyn 1, Dyn2) and a monitoring relay (U1, U2).

6. Transmission/reception unit according to Claim 4, **characterized in that** the data outputs of the computer (µC1, µC2) are each connected for the parallel data to an output relay (R1A - R16A, R1B - R16B), to which the parallel data is passed.

7. Transmission/reception unit according to Claim 4, **characterized in that** a monitoring circuit (25) is provided to monitor the monitoring device.

8. System for transmission of telegrams with safe signalling, **characterized in that** at least two transmission/reception units (1, 20) according to Claim 4 each have at least one ISDN interface (ISDN, 22) and are connected via a communication channel (11).

9. System according to Claim 8, **characterized in that** the communication channel (11) is in the form of a two-wire line.

## Revendications

1. Procédé destiné à la récupération sécurisée de données parallèles d'un télégramme pour la technique de signalisation ferroviaire, avec les étapes de procédé suivantes :
a) soumettre les premiers télégrammes d'un premier canal de données (CH1) contenant des données parallèles à un contrôle d'absence d'erreurs ;
b) générer un premier signal de fréquence dynamique, le niveau de signal du premier signal de fréquence dynamique étant modifié, si un premier télégramme sans erreurs est distingué ;
c) soumettre les seconds télégrammes d'un second canal de données (C112) contenant des données parallèles à un contrôle d'absence d'erreurs ;
d) générer un second signal de fréquence dynamique, le niveau de signal du second signal de fréquence dynamique étant modifié, si un second télégramme sans erreurs est distingué ;
e) sortie de données à sécurité intégrée qui présentent un état sécurisé, si le premier signal de fréquence dynamique ne modifie pas son niveau de signal pendant une première période pouvant être prescrite ou pour une première quantité de premiers télégrammes pouvant être prescrite ; ou si le second signal de fréquence dynamique ne modifie pas son niveau de signal pendant une seconde période pouvant être prescrite ou pour une seconde quantité de seconds télégrammes pouvant être prescrite.
f) autrement, sortie des données parallèles.

2. Procédé selon la revendication 1, **caractérisé en ce que** la sortie de données parallèles est surveillée par un circuit de commande de surveillance (25).

3. Procédé selon la revendication 1, **caractérisé en ce que** les télégrammes d'au moins deux canaux (CH1, CH2) sont transmis simultanément entre deux unités d'émission-réception (1,20).

4. Unité d'émission-réception (1, 20) pour un système lié à la sécurité de la technique de signalisation ferroviaire destinée à la mise en oeuvre du procédé selon la revendication 1, dans laquelle l'unité d'émission-réception (1, 20) présente un premier ordinateur (µC1) qui sort les données parallèles contenues dans le premier télégramme destiné à contrôler l'absence d'erreurs d'un premier télégramme d'un premier canal de données (CH1), est reliée à un premier dispositif de surveillance (Dynl, (U1)) et au premier dispositif de surveillance (Dynl, (U1)) et fournit un premier signal de fréquence dynamique au premier dispositif de surveillance (Dynl, (U1)), dans laquelle le premier dispositif de surveillance (Dynl, (U1)) détecte à partir du premier signal de fréquence dynamique, si les données parallèles contenues dans le télégramme et placées aux sorties de données de l'ordinateur (µC1) peuvent être sorties de l'unité d'émission-réception (1, 20) présente en outre un second ordinateur (µC2) destiné à contrôler l'absence d'erreurs d'un second télégramme d'un second canal de données (CH2) sort les données parallèles contenues dans le second télégramme, est relié à un second dispositif de surveillance (Dyn2) ; (U2)) et fournit un second signal de fréquence dynamique au second dispositif de surveillance (Dyn2) ; (U2)), dans laquelle le second dispositif de surveillance détecte à partir du second signal de fréquence, si les données parallèles contenues dans le télégramme peuvent être sorties de l'unité d'émission-réception.

5. Unité d'émission-réception selon la revendication 4, **caractérisée en ce que** le dispositif de surveillance présente un circuit dynamique (Dyn1, Dyn2) et un relais de surveillance (U1, U2).

6. Unité d'émission-réception selon la revendication 4, **caractérisée en ce que** les sorties de données de l'ordinateur (µC1, µC2) pour les données parallèles sont reliées respectivement à un relais de sortie (R1A-R16A, R1B-R16B), auxquelles les données parallèles sont transmises.

7. Unité d'émission-réception selon la revendication 4, **caractérisée en ce qu'**un circuit de commande de surveillance (25) destiné à la surveillance du dispositif de surveillance est prévu.

8. Système destiné à la transmission de télégrammes à sécurité intégrée, **caractérisé en ce qu'**au moins deux unités d'émission-réception (1, 20) selon la revendication 4, présentent respectivement au moins une interface RNIS (RNIS, 22) et sont reliées par un canal de communication (11).

9. Système selon la revendication 8, **caractérisé en ce que** le canal de communication (11) est formé en tant que ligne à deux fils.
